# EUROPEAN PATENT SPECIFICATION

(11) **EP 2 759 697 B1**
(45) Date of publication and mention of the grant of the patent: **21.03.2018**
(21) Application number: 14250007.3
(22) Date of filing: 20.01.2014
(51) Int. Cl.: F03B 13/18, F03B 17/02

(54) **Wave-driven power generation system**
Wellengetriebenes Stromerzeugungssystem
Système de génération de puissance entraîné par ondes

(30) Priority: 28.01.2013 TW 102103223
(43) Date of publication of application: 30.07.2014
(73) Proprietor: Peng, Sheng-Po, Miaoli County (TW)
(72) Inventor: Peng, Sheng-Po, Miaoli County (TW)
(74) Representative: Whitaker, Iain Mark

(56) References cited:
- DE-A1-102009 022 068
- GB-A- 428 394
- US-A- 1 485 574
- US-A- 3 350 724
- US-A- 4 718 231

## Description

### BACKGROUND OF THE INVENTION

### 1. Field of the Invention

The present invention relates to power generation technology, and more particularly to a wave-driven power generation system, which moves wave-making barrels in water reservoirs to create water waves, causing float boards to move a transmission gearbox for transferring rotary driving force through an inertial wheel set to a power generating unit in generating electricity.

### 2. Description of the Related Art

Although nuclear power is an effective source of power, the problems of nuclear waste disposal and nuclear power safety have always been controversial. At present, thermal power can provide livelihood electricity, however it is not in line with the principles of environmental protection and its cost is also high. Further, wind-driven and solar power generators are environmentally friendly, however, their cost is high. Further, wind-driven and solar power generators are subject to weather restrictions. Further, hydroelectricity is the production of electrical power through the use of the gravitational force of falling or flowing water, however, the level of gravitational force of falling or flowing water affects the performance of hydroelectric power generation. Further, hydroelectric power plants must be built near dams and water sources, so they are likely to be small and geographically limited.

Therefore, it is desirable to provide a power generation system that is free from geographical limitations, cost-effective and environmentally friendly, and that does not cause pollutions or produce waste materials.

Wave-driven power generation systems of the prior art include US 1,485,574, designed to be driven by sea waves or tides and comprising a float at the end of a long transmission rod that oscillates with the rise and fall of the float, the oscillation of the rod being used to drive a gear and pumps or compressors.

### SUMMARY OF THE INVENTION

The present invention has been accomplished under the circumstances in view. It is the main object of the present invention to provide a wave-driven power generation system, which uses a low power consumption motor reducer to move wave-making barrels in water reservoirs for creating water waves, causing float boards to move a transmission gearbox for transferring rotary driving force through an inertial wheel set to a power generating unit in generating electricity.

It is another object of the present invention to provide a wave-driven power generation system, which is free from geometrical limitations, less expensive for a wide range of applications and in line with the principles of environmental protection, and, which does not cause pollution or produce waste materials and allows repeated use of the supplied water.

### BRIEF DESCRIPTION OF THE DRAWING

Fig. 1 is a schematic sectional side view of a wave-driven power generation system in accordance with the present invention.
Fig. 2 is a schematic top plain view of a part of the present invention, illustrating the coupling arrangement between one float board and the associating transmission gearbox.
Fig. 3 is a schematic top plain view illustrating one application example of the present invention.
Fig. 4 is a schematic top plain view illustrating another application example of the present invention.
Fig. 5 corresponds to Fig. 2, illustrating the internal arrangement of the transmission gearbox.

### DETAILED DESCRIPTION OF THE INVENTION

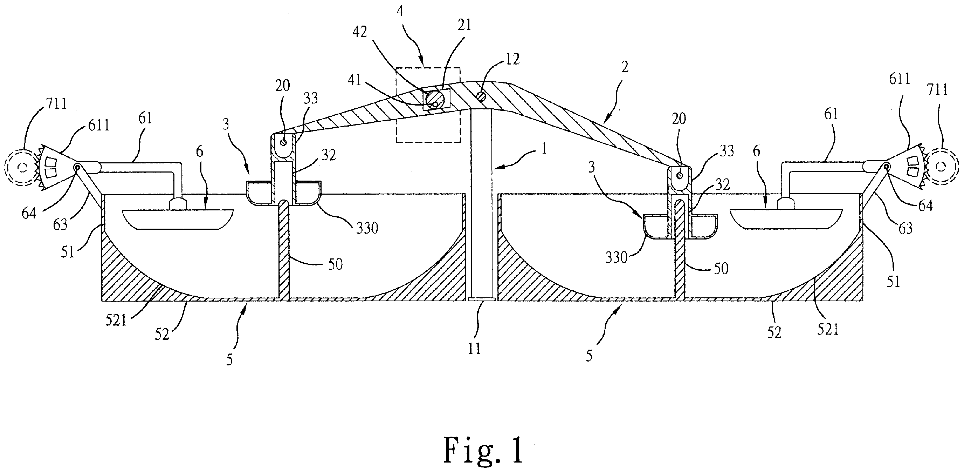

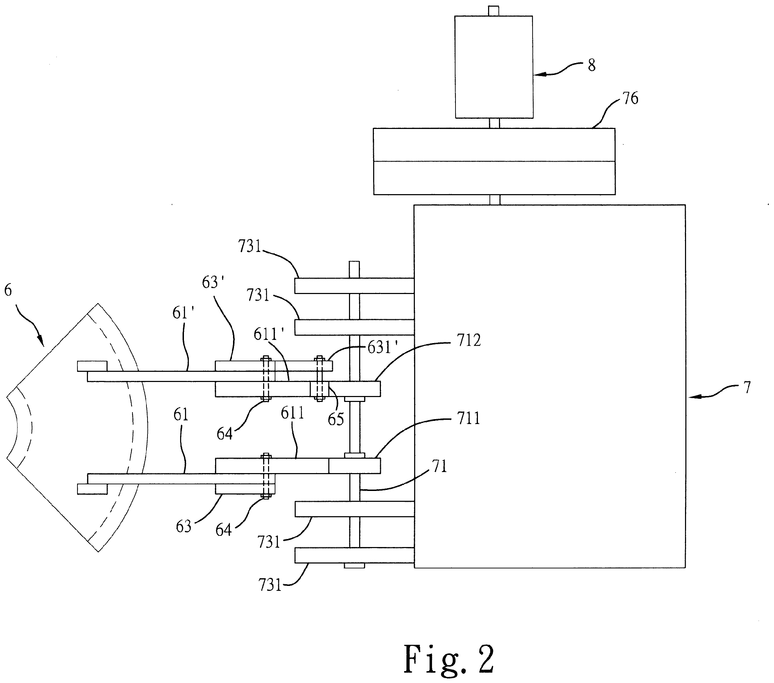

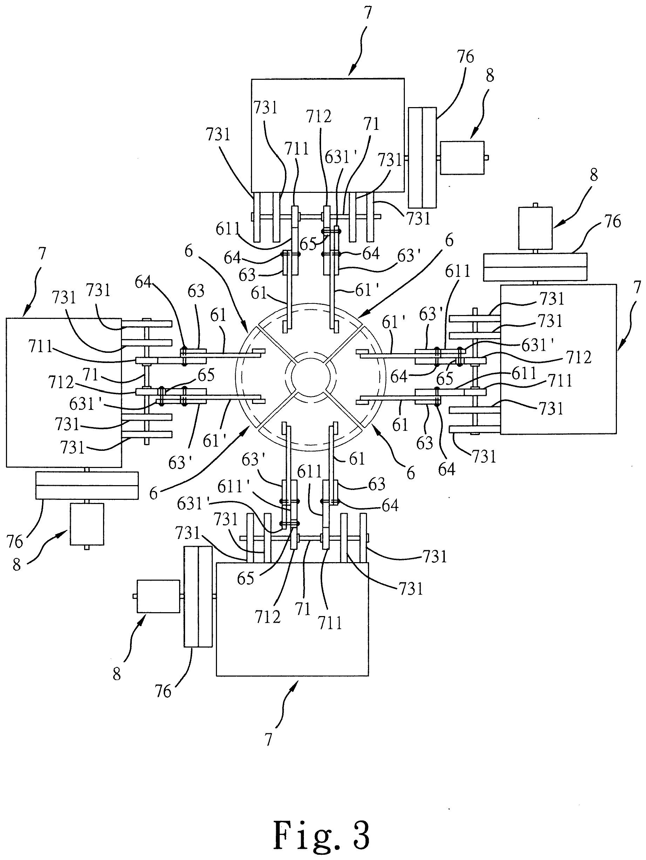

Referring to Figs. 1-5, a wave-driven power generation system in accordance with the present invention is shown. The wave-driven power generation system comprises:
an upright support frame **1** having a bottom end **11** thereof fixedly fastened to the ground or a floor in a building and an opposing top end thereof spaced above the ground or floor at a predetermined distance and provided with a pivot connection member **12**;
a rocker bar **2** pivotally coupled to the pivot connection member **12** of the upright support frame **1** in a balanced manner and having a coupling groove **21** located at one side thereof at a suitable location;
a plurality of wave-making barrels **3** having respective top handles **33** thereof respectively and symmetrically connected to two distal ends of the rocker bar **2**;
a motor reducer **4** having an eccentric wheel **42** mounted at an output shaft **41** thereof and coupled to the coupling groove **21** of the rocker bar **2** and rotatable to rotate the rocker bar **2** alternatively up and down;
at least one water reservoir **5** holding a proper amount of water;
at least one set of first support bar **63** and second support bar **63'** (see Fig. 2) mounted at an upright peripheral wall **51** of the at least one water reservoir **5**, each second support bar **63'** having an extension portion **631'**;
a driven gear **65** pivotally mounted at the extension portion **631'** of each second support bar **63'**;
a respective pivot pin **64** respectively and pivotally mounted at each first support bar **63** and each second support bar **63'**;
a first gear wheel **611** fixedly mounted at the pivot pin **64** at each first support bar **63**;
a second gear wheel **611'** fixedly mounted at the pivot pin **64** at each second support bar **63'** and meshed with the driven gear **65** at the respective second support bar **63'**;
at least one float board **6** supported on and movable up and down with the water level in the at least water reservoir **5**;
at least one set of first connection rod **61** and second connection rod **61'** respectively fixedly connected to the at least one float board **6** (see Figs. 1-3), the first connection rod **61** and second connection rod **61'** each having respective one end thereof fixedly connected to the associating float board 6 and respective opposite end thereof respectively pivotally connected to one respective first gear wheel **611** and one respective second gear wheel **611'** by means of the respective pivot pins **64** at the respective first support bar **63** and second support bar **63'** (see Fig. 2);
at least one driven shaft **71** respectively disposed corresponding to the at least one float board **6**;
a first unidirectional ratchet wheel **711** mounted at each driven shaft **71** and meshed with one respective first gear wheel **611**;
a second unidirectional ratchet wheel **712** mounted at each driven shaft **71** and meshed with one respective driven gear **65** (see Figs. 2 and 3);
at least one transmission gearbox **7**;
at least one transmission chain wheel or belt wheel **731** respectively coupled between the at least one transmission gearbox **7** and the at least one driven shaft **71** (see Figs. 2 and 3);
at least one power generation unit **8**; and
at least one inertia wheel set **76** respectively coupled between the at least one transmission gearbox **7** and the at least one power generation unit **8** for driving the at least one power generation unit **8** to generate electricity.

Thus, when the motor reducer **4** is started to rotate the output shaft **41**, the eccentric wheel **42** is rotated to bias the rocker bar **2** on the upright support frame **1**, moving the wave-making barrels **3** alternatively up and down in the at least one water reservoir **5**, thereby making waves in the water in the at least one water reservoirs **5.** At this time, each float board **6** floats up and down with the water waves in the respective water reservoir **5**, causing the associating first and second connection rods **61** and **61'** to rotate the respective first gear wheel **611** and second gear wheel **611'** respective to the associating first support bar **63** and second support bar **63',** and thus the respective first unidirectional ratchet wheel **711** and second unidirectional ratchet wheel **712** are driven by the respective first gear wheel **611** and second gear wheel **611'** to rotate the respective driven shaft **71.** During rotation of the driven shaft **71,** the respective at least one transmission chain wheel or belt wheel **731** is driven to rotate the respective transmission gearbox **7**, enabling the rotary driving force to be transferred through the respective at least one inertia wheel set **76** to the respective power generation unit **8**, causing the respective power generation unit **8** to generate electricity.

Further, the top handle **33** of each wave-making barrel **3** is pivotally connected to one end of the rocker bar **2** with a respective pivot connection member **20.** Further each wave-making barrel **3** has a vertically extended sliding slot **32** axially slidably coupled to a respective upright guide post **50** in one respective water reservoir **5** to facilitate smooth sliding movement.

Further, the float board **6** is selected from the material group of metal, cement, metal reinforced cement and cement mixture. During movement of the wave-making barrels **3** to make water waves in the at least one water reservoir **5**, the thrust force of the water waves and the buoyancy of water can lift each float board **6.** When the water waves decline, each float board **6** can drop subject to its gravity weight.

Further, the inner surface **521** of the bottom wall **52** of each water reservoir **5** curves smoothly inward, facilitating formation of water waves. Further, each water reservoir **5** can be made of high-strength metal, high-strength plastics, cement, cement mixture, or any other high-strength material, in the shape of a circular, rectangular or multilateral drum or water pool, or a top-open water container. Further, the amount of water contained in each water reservoir **5** is preferably above 2/3 of its overall capacity.

Further, each wave-making barrel **3** has a smoothly arched bottom wall **330**, facilitating making water waves.

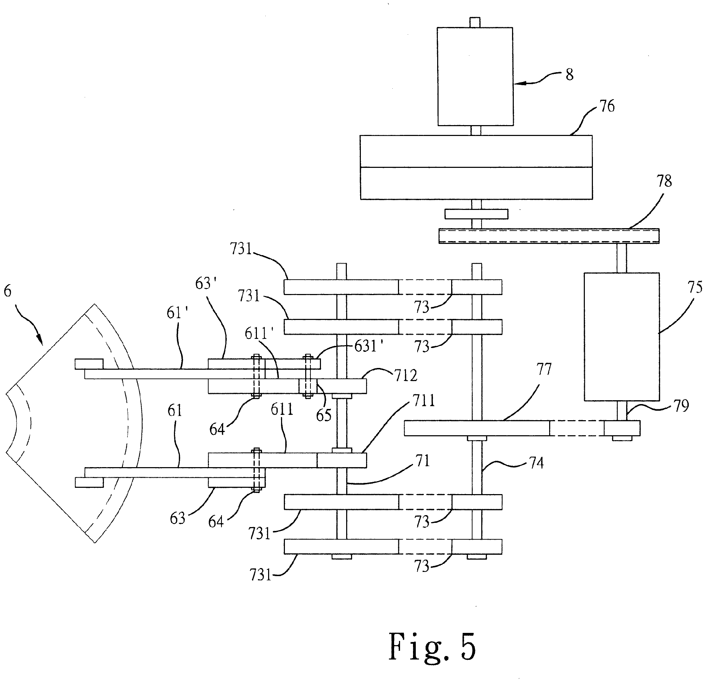

Further, referring to Fig. 5, the aforesaid transmission gearbox **7** coupled between the at least one transmission chain wheel or belt wheel **731** and the at least one inertia wheel set **76** (see Fig. 2) comprises a transmission shaft **74**, at least one first chain or belt transmission mechanism **73** mounted at the transmission shaft **74** and coupled to the at least one transmission chain wheel or belt wheel **731**, a second chain or belt transmission mechanism **77** mounted at the transmission shaft **74**, a reduction gear set **75** having an input shaft **79** coupled to the second chain or belt transmission mechanism **77**, and a third chain or belt transmission mechanism **78** coupled between the reduction gear set **75** and the inertia wheel set **76** for driving the respective power generating unit **8** through the inertia wheel set **76.**

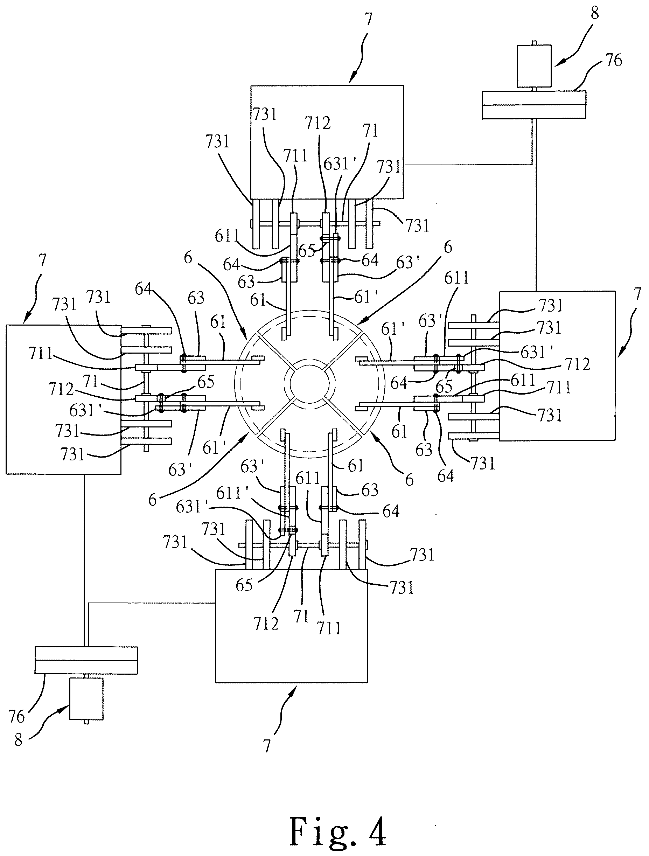

Further, as shown in Fig. 3, when the first and second connection rods **61** and **61'** of each float board **6** are forced to rotate the respective driven shaft **71,** the respective at least one transmission chain wheel or belt wheel **731** is driven to rotate the respective transmission gearbox **7,** enabling the rotary driving force to be transferred through the respective inertia wheel set **76** to the respective power generating unit **8** so that the respective power generating unit **8** can be driven to generate electricity. In the application example shown in Fig. 3, 4 pieces of float board **6** are respectively arranged for rotating one respective transmission gearbox **7**, enabling the rotary driving force to be transferred through one respective inertia wheel set **76** to one respective power generating unit **8.** In the application example shown in Fig. 4, two transmission gearboxes **7** are linked to one power generating unit **8** through one respective inertia wheel set **76.**

Further, a plurality of float boards **6** can be linked together by a movable connector between each two adjacent float boards **6** to float in each water reservoir **5.**

In conclusion, the invention provides a wave-driven power generation system that has advantages and features as follows:
Simply providing electric power to the motor reducer **4**, the rocker bar **2** can be turned to move the wave-making barrels **3** alternatively up and down in creating water waves in each water reservoir **5**, causing each float board **6** to rotate one respective transmission gearbox **7** for the transfer of the rotary driving force through each inertial wheel set **76** to one respective power generating unit **8**, and therefore each power generating unit **8** can effectively generate electricity with less power consumption.

The wave-driven power generation system is free from geometrical limitations, and does not cause pollution or produce waste materials. Further, the water contained in each water reservoir **5** can be repeatedly used. Therefore, the wave-driven power generation system is in line with the principles of environmental protection. When compared to solar or wind-driven power generation systems, the wave-driven power generation system of the invention is less expensive for a wide range of applications.

## Claims

1. A wave-driven power generation system, comprising:
an upright support frame (1) fixedly fastened to a floor;
at least one water reservoir (5) respectively holding a predetermined amount of water;
a rocker bar (2) pivotally mounted at a top end of said upright support frame (1) in a balanced manner and drivable by an external force to turn alternatively up and down on said upright support frame (1), said rocker bar (2) having a coupling means (21);
a plurality of wave-making barrels (3) symmetrically coupled to two opposite ends of said rocker bar (2) and movable with said rocker bar (2) to cause the water in each said water reservoir (5) to create water waves, each said wave-making barrel (3) having a top handle (33) pivotally coupled to one end of said rocker bar (2);
a motor reducer (4) for turning said rocker bar (2) alternatively up and down on said upright support frame (1), said motor reducer (4) comprising an output shaft (41) and an eccentric wheel (42) mounted at a distal end of said output shaft (41) and coupled to said coupling means (21) of said rocker bar (2);
at least one float board (6) floating up and down with created water waves in each said water reservoir (5), each said float board (6) having a first connection rod (61) and a second connection rod (61') fixedly connected thereto in a parallel manner;
at least one power generating unit (8) rotatable to generate electricity;
at least one transmission gearbox (7) respectively coupled between the first connection rod (61) and second connection rod (61') of each said float board (6) and said at least one power generating unit (8) for transferring a rotary driving force from said at least one float board (6) to said at least one power generating unit (8); and
at least one inertial wheel set (76) respectively coupled between said at least one transmission gearbox (7) and said at least one power generating unit (8).

2. The wave-driven power generation system as claimed in claim 1, further comprising:
at least one set of first support bar (63) and second support bar (63') respectively mounted at an upright peripheral wall (51) of each said water reservoir (5), said second support bar (63') having an extension portion (631');
a driven gear (65) respectively pivotally mounted at the extension portion (631') of each said second support bar (63');
a pivot pin (64) respectively and pivotally mounted at each said first support bar (63) and each said second support bar (63') and respectively connected to one of the first connection rod (61) and second connection rod (61') of each said float board (6);
a first gear wheel (611) fixedly mounted at the pivot pin (64) at each said first support bar (63);
a second gear wheel (611') fixedly mounted at the pivot pin (64) at each said second support bar (63') and meshed with the driven gear (65) at the respective said second support bar (63');
at least one driven shaft (71) coupled with said at least one transmission gearbox (7);
a first unidirectional ratchet wheel (711) mounted at each said driven shaft (71) and meshed with one respective said first gear wheel (611);
a second unidirectional ratchet wheel (712) mounted at each said driven shaft (71) and meshed with one respective said driven gear (65); and
at least one transmission wheel (731) respectively coupled between said at least one transmission gearbox (7) and said at least one driven shaft (71).

3. The wave-driven power generation system as claimed in claim 2, wherein each said transmission gearbox (7) comprises a transmission shaft (74), at least one first chain or belt transmission mechanism (73) mounted at said transmission shaft (74) and coupled to one respective said transmission wheel (731), a second chain or belt transmission mechanism (77) mounted at said transmission shaft (74), a reduction gear set (75) having an input shaft (79) thereof coupled to said second chain or belt transmission mechanism (77), and a third chain or belt transmission mechanism (78) coupled between said reduction gear set (75) and one respective said inertia wheel set (76).

4. The wave-driven power generation system as claimed in claim 1, wherein each said water reservoir (5) comprises at least one upright guide post (50); the top handle (33) of each said wave-making barrel (3) is pivotally connected to one end of said rocker bar (2) with a respective pivot connection member (20); each said wave-making barrel (3) comprises a vertically extended sliding slot (32) axially slidably coupled to one said upright guide post (50) in one said water reservoir (5).

5. The wave-driven power generation system as claimed in claim 1, wherein each said float board (6) is made of metal having a predetermined gravity weight.

6. The wave-driven power generation system as claimed in claim 1, wherein each said water reservoir (5) is made of a high-strength material selected from the group of high-strength metal, high-strength plastics, cement and cement mixture in the shape of a top-open water container; each said water reservoir (5) having an inner surface (521) of a bottom wall (52) thereof curved smoothly inward; the amount of water contained in each said water reservoir (5) is preferably above 2/3 of the overall capacity of each said water reservoir (5).

7. The wave-driven power generation system as claimed in claim 1, wherein said coupling means of said rocker bar (2) is a coupling groove (21).

8. The wave-driven power generation system as claimed in claim 1, wherein a plurality of said float boards (6) are linked together by a movable connector between each two adjacent said float boards (6) to float in each said water reservoir (5).

## Patentansprüche

1. Ein wellenbetriebenes Energieerzeugungssystem, bestehend aus:
einem aufrecht stehendem Tragrahmen (1), der fest an einem Boden befestigt ist;
mindestens einem Wasserreservoir (5), das jeweils eine vorbestimmte Menge an Wasser speichert;
einem Schwingarm (2), der an einem oberen Ende des aufrechten Tragrahmens (1) in einer ausgewogenen Weise schwenkbar montiert und durch eine äußere Kraft antreibbar ist, um abwechselnd auf dem aufrechten Tragrahmen (1) auf und ab zu schwenken, wobei der Schwingarm (2) über eine Kopplungseinrichtung verfügt (21);
einer Vielzahl von Zylindern zur Wellenerzeugung (3), die symmetrisch mit zwei gegenüberliegenden Enden des Schwingarms (2) gekoppelt sind und mit dem Schwingarm (2) bewegt werden können, um in jedem Wasserreservoir (5) jeweils Wasserwellen zu erzeugen, wobei der Zylinder zur Wellenerzeugung (3) einen oberen Griff (33) aufweist, der schwenkbar mit einem Ende des Schwingarms (2) verbunden ist;
einem Getriebemotor (4) zum abwechselnden Drehen des Schwenkarms (2) auf dem aufrechten Tragrahmen (1), wobei der Getriebemotor (4) eine Abtriebswelle (41) und ein Exzenterrad (42) aufweist, das an einem distalen Ende der Abtriebswelle (41) befestigt und mit den Kopplungsmitteln (21) des Schwenkarms (2) gekoppelt ist;
mindestens einem Schwebebrett (6), das auf den erzeugten Wasserwellen in jedem Wasserreservoir (5) auf und ab treibt, wobei jedes Schwebebrett (6) eine erste Verbindungsstange (61) und eine zweite Verbindungsstange (61') aufweist, die damit parallel verbunden sind;
mindestens einer Energieerzeugungseinheit (8), die drehbar ist, um Elektrizität zu erzeugen;
mindestens einem Getriebegehäuse (7), das jeweils zwischen der ersten Verbindungsstange (61) und der zweiten Verbindungsstange (61') jedes Schwebebretts (6) gekoppelt ist, und mindestens einer Energieerzeugungseinheit (8) zum Übertragen eines Drehantriebs von mindestens einem Schwebebrett (6) zu mindestens einer Energieerzeugungseinheit (8); und
mindestens einem Trägheitsradsatz (76), der jeweils zwischen mindestens einem Getriebegehäuse (7) und mindestens einer Energieerzeugungseinheit (8) gekoppelt ist.

2. Wellenbetriebenes Energieerzeugungssystem nach Anspruch 1, das ferner besteht aus:
mindestens einem Satz der ersten Trägerstange (63) und zweiten Trägerstange (63'), die jeweils an einer aufrechten Umfangswand (51) jedes Wasserbehälters (5) angebracht sind, wobei die zweite Trägerstange (63') einen Verlängerungsabschnitt aufweist (631');
einem angetriebenen Zahnrad (65), das jeweils schwenkbar an dem Verlängerungsabschnitt (631') jeder zweiten Trägerstange (63') angebracht ist;
einem Drehbolzen (64), der jeweils an jeder ersten Trägerstange (63) und an jeder zweiten Trägerstange (63') schwenkbar angebracht ist und jeweils mit der ersten Verbindungsstange (61) und zweiten Verbindungsstange (61') jedes Schwebebretts (6) verbunden ist;
einem ersten Zahnrad (611), das an dem Schwenkstift (64) an jeder der ersten Auflageleiste (63) fest montiert ist;
einem zweiten Zahnrad (611'), das fest an dem Schwenkstift (64) an jeder zweiten Trägerstange (63') angebracht ist und mit dem angetriebenen Zahnrad (65) mit der entsprechenden zweiten Trägerstange (63') vernetzt ist;
mindestens einer Antriebswelle (71), die mit mindestens einem Getriebegehäuse (7) gekoppelt ist;
einem ersten unidirektionalen Sperrrad (711), das an jeder der Antriebswellen (71) angebracht ist und mit einem entsprechenden ersten Zahnrad (611) vernetzt ist;
einem zweiten unidirektionalen Sperrrad (712), das an jeder der Antriebswellen (71) angebracht und mit einem jeweiligen angetriebenen Zahnrad (65) vernetzt ist; und
mindestens einem Getrieberad (731), das jeweils zwischen mindestens einem Getriebegehäuse (7) und mindestens einer Antriebswelle (71) gekoppelt ist.

3. Wellenbetriebenes Energieerzeugungssystem nach Anspruch 2, wobei jedes Getriebegehäuse (7) eine Übertragungswelle (74) und mindestens einen ersten Ketten- oder Riemenübertragungsmechanismus (73), der an der Übertragungswelle (74) angebracht ist und mit einem Übertragungsrad (731) gekoppelt ist, einen an der Übertragungswelle (74) angebrachten Ketten- oder Riemenübertragungsmechanismus (77), ein Untersetzungszahnradsatz (75) mit einer Eingangwelle (79), die somit mit dem zweiten Ketten- oder Riemenübertragungsmechanismus (77) gekoppelt ist, und einen dritten Ketten-oder Riemenübertragungsmechanismus (78) aufweist, der zwischen dem Untersetzungsgetriebe (75) und einem entsprechenden Trägheitsradsatz (76) gekoppelt ist.

4. Wellenbetriebenes Energieerzeugungssystem nach Anspruch 1, wobei jedes Wasserreservoir aus (5) mindestens einem aufrechten Führungsstift (50) besteht; der obere Griff (33) jedes Zylinders zur Wellenerzeugung (3) mit einem Ende des Schwenkarms (2) mit einem jeweiligen Schwenkverbindungselement (20) schwenkbar verbunden ist; wobei jeder Zylinder zur Wellenerzeugung (3) einen vertikal verlängerten Gleitschlitz (32) aufweist, der axial verschiebbar mit einem der aufrechten Führungsstifte (50) in einem der Wasserbehälter (5) verbunden ist.

5. Wellenbetriebenes Energieerzeugungssystem nach Anspruch 1, bei dem jedes Schwebebrett (6) aus Metall ist und ein vorbestimmtes Schwerkraftgewicht aufweist.

6. Wellenbetriebenes Energieerzeugungssystem nach Anspruch 1, wobei jeder Wasserbehälter (5) aus einem hochfesten Material besteht, das aus der Gruppe von hochfestem Metall, hochfesten Kunststoffen, Zement und Zementgemisch in Form eines oben offenen Wasserbehälters ausgewählt ist; wobei jedes Wasserreservoir (5) eine Innenfläche (521) seiner Bodenwand (52) aufweist, die glatt nach innen gekrümmt ist; die in jedem Wasserreservoir (5) enthaltene Wassermenge beträgt vorzugsweise mehr als 2/3 der Gesamtkapazität jedes Wasserreservoirs (5).

7. Wellenbetriebenes Energieerzeugungssystem nach Anspruch 1, wobei die Kopplungseinrichtung des Schwenkarms (2) eine Kopplungsnut (21) ist.

8. Wellenbetriebenes Energieerzeugungssystem nach Anspruch 1, wobei eine Mehrzahl der Schwebebretter (6) durch ein bewegliches Verbindungsstück zwischen jeweils zwei benachbarten Schwebebrettern (6) miteinander verbunden ist, um in jedem Wasserbehälter (5) zu treiben.

## Revendications

1. Un système de génération d'énergie commandé par les ondes comprenant :
un cadre de support vertical (1) fixé solidement à un plancher ;
au moins un réservoir d'eau (5), lequel contient une quantité prédéterminée d'eau ;
une barre basculante (2) dont le montage à l'extrémité supérieure dudit cadre de support vertical (1) lui permet de pivoter de manière équilibrée et pouvant être entraînée par une force externe pour tourner alternativement vers le haut et vers le bas sur ledit cadre de support vertical (1), cette barre basculante ayant un moyen de couplage (21) ;
une pluralité de cylindres de production d'ondes (3) couplés symétriquement à deux extrémités opposées de ladite barre basculante (2) et déplaçables avec ladite barre basculante (2) pour amener l'eau dans chacun desdits réservoirs d'eau (5) pour créer des vagues, chaque cylindre de production d'ondes (3) ayant une poignée supérieure (33) couplée de manière pivotante à une extrémité de ladite barre basculante (2) ;
un réducteur de moteur (4) pour faire tourner alternativement vers le haut et vers le bas ladite barre basculante (2) sur ledit cadre de support vertical (1), ledit réducteur de moteur (4) comprenant un arbre de sortie (41) et une roue excentrique (42) montée à l'extrémité distale dudit arbre de sortie (41) et couplée audit moyen d'accouplement (21) de ladite barre basculante (2) ;
au moins une planche flottante (6) flottant vers le haut et vers le bas avec des ondes d'eau créées dans chaque réservoir d'eau (5), chaque planche flottante (6) ayant une première tige de liaison (61) et une seconde tige de liaison (61 ') fixées de manière parallèle à celle-ci ;
au moins une unité de génération d'énergie (8) pouvant tourner pour générer de l'électricité ;
au moins une boîte de transmission (7), laquelle est couplée entre la première tige de liaison (61) et la deuxième tige de liaison (61') de chaque planche flottante (6) et au moins une unité de génération d'énergie (8) pour transférer une force d'impulsion rotatrice à partir de ladite planche flottante (6) jusqu'à ladite unité de génération d'énergie (8) ; et
au moins un ensemble de roues inertielles (76), lequel est couplé entre ladite boîte de transmission (7) et ladite unité de génération d'énergie (8).

2. Système de génération d'énergie commandé par les ondes selon la revendication 1, comprenant en outre :
au moins un ensemble de la première barre de support (63) et de la seconde barre de support (63'), laquelle est montée sur une paroi périphérique verticale (51) de chaque réservoir d'eau (5), ladite seconde barre de support (63') ayant une partie d'extension (631') ;
un engrenage entraîné (65), lequel est monté de manière pivotante sur la partie d'extension (631') de chaque seconde barre de support (63') ;
un axe de pivotement (64), lequel est monté de manière pivotante sur chacune desdites premières barres de support (63) et chacune desdites secondes barres de support (63'), et lequel est relié à l'une des premières tiges de connexion (61) et secondes tiges de connexion (61') de chacune desdites plaques flottantes (6) ;
une première roue dentée (611) montée fixe au niveau de l'axe de pivotement (64) au niveau de chaque première barre de support (63) ;
une seconde roue dentée (611') montée fixe sur l'axe de pivotement (64) au niveau de chaque seconde barre de support (63') et maillée avec l'engrenage entraîné (65) au niveau de ladite deuxième barre de support (63') ;
au moins un arbre entraîné (71) couplé à ladite boîte de transmission (7) ;
une première roue à cliquet unidirectionnelle (711) montée sur chacun desdits arbres entraînés (71) et engrenée avec ladite première roue dentée (611) ;
une seconde roue à cliquet unidirectionnelle (712) montée au niveau de chacun desdits arbres entraînés (71) et engrenée avec ladite roue dentée entraînée (65) ; et
au moins une roue de transmission (731), laquelle est couplée entre ladite boîte de transmission (7) et ledit arbre entraîné (71).

3. Système de génération d'énergie commandé par les ondes selon la revendication 2, dans lequel chaque boîte de transmission (7) comprend un arbre de transmission (74), au moins un premier mécanisme de transmission à chaîne ou à courroie (73) monté sur ledit arbre de transmission (74) et couplé à ladite roue de transmission (731), un second mécanisme de transmission à chaîne ou à courroie (77) monté sur ledit arbre de transmission (74), un ensemble d'engrenage réducteur (75) comportant un arbre d'entrée (79) couplé audit second mécanisme de transmission à chaîne ou à courroie (77) et un troisième mécanisme de transmission à chaîne ou à courroie (78) couplé entre ledit ensemble d'engrenage réducteur (75) et ledit ensemble de roues d'inertie (76).

4. Système de production d'énergie commandé par des ondes selon la revendication 1, dans lequel chacun desdits réservoirs d'eau (5) comprend au moins un montant de guidage vertical (50) ; la poignée supérieure (33) de chacun desdits cylindres de production d'ondes (3) est connectée de manière pivotante à une extrémité de ladite barre basculante (2) avec ledit élément de liaison pivotant (20) ; chacun desdits cylindres de production d'ondes (3) comprend une fente coulissante (32) s'étendant verticalement et couplée en axe de manière coulissante à l'un desdits montants de guidage verticaux (50) dans un desdits réservoirs d'eau (5).

5. Système de production d'énergie commandé par des ondes selon la revendication 1, dans lequel chaque planche flottante (6) est faite de métal ayant un poids prédéterminé.

6. Système de génération d'énergie commandé par des ondes selon la revendication 1, dans lequel chacun desdits réservoirs d'eau (5) est constitué d'un matériau à haute résistance choisi dans le groupe constitué des métaux à haute résistance, plastiques à haute résistance, ciment et mélange de ciment sous la forme d'un réservoir d'eau à ouverture supérieure ; chacun desdits réservoirs d'eau (5) ayant une surface interne (521) d'une paroi de fond (52) incurvée harmonieusement vers l'intérieur ; la quantité d'eau contenue dans chacun desdits réservoirs d'eau (5) est de préférence supérieure aux 2/3 de la capacité globale de chacun desdits réservoirs d'eau (5).

7. Système de production d'énergie commandé par des ondes selon la revendication 1, dans lequel lesdits moyens de couplage de ladite barre basculante (2) sont une rainure de couplage (21).

8. Système de génération d'énergie commandé par ondes selon la revendication 1, dans lequel une pluralité desdites planches flottantes (6) sont reliées entre elles par un connecteur mobile entre chacune des deux planches flottantes adjacentes (6) pour flotter dans chacun desdits réservoirs d'eau (5).
